# FASCICULE DE BREVET EUROPEEN

(11) **EP 1 928 736 B1**
(45) Date de publication et mention de la délivrance du brevet: **12.09.2012**
(21) Numéro de dépôt: 06793752.4
(22) Date de dépôt: 22.09.2006
(51) Int. Cl.: B64D 27/26

(54) **ENSEMBLE MOTEUR POUR AERONEF COMPRENANT UN MOTEUR AINSI QU'UN DISPOSITIF D'ACCROCHAGE D'UN TEL MOTEUR**
MOTORANORDNUNG FÜR EIN LUFTFHARZEUG MIT EINEM MOTOR SOWIE EINER VORRICHTUNG ZUR AUFHÄNGUNG DIESES MOTORS
ENGINE ASSEMBLY FOR AIRCRAFT COMPRISING AN ENGINE AS WELL AS A DEVICE FOR MOUNTING SAID ENGINE

(30) Priorité: 26.09.2005 FR 0552869
(43) Date de publication de la demande: 11.06.2008
(73) Titulaire: AIRBUS OPERATIONS, 31060 Toulouse (FR)
(72) Inventeur: DIOCHON, Lionel, F-31000 Toulouse (FR); MASTROBERTI, Raffaella, 84134 Salerno (IT); PETRISSANS, Isabelle, F-31400 Toulouse (FR)
(74) Mandataire: Ilgart, Jean-Christophe
(86) Numéro de dépôt international: PCT/EP2006/066635
(87) Numéro de publication internationale: WO 2007/033994

(56) Documents cités:
- EP-A- 0 805 108
- GB-A- 2 010 969
- GB-A- 2 275 308
- US-B1- 6 398 161

## Description

### DOMAINE TECHNIQUE

La présente invention se rapporte de façon générale au domaine des dispositifs d'accrochage de moteur destinés à être interposés entre une voilure d'aéronef et un moteur, et plus particulièrement à un ensemble moteur comprenant un tel dispositif d'accrochage.

L'invention peut être utilisée sur tout type d'aéronef équipé de turboréacteurs ou de turbopropulseurs, ou encore de tout autre type de moteur.

Ce type de dispositif d'accrochage, également appelé mât d'accrochage ou « EMS » (de l'anglais « Engine Mounting Structure »), permet de suspendre un turbomoteur au-dessous de la voilure de l'aéronef, ou bien de monter ce turbomoteur au-dessus de cette même voilure.

### ETAT DE LA TECHNIQUE ANTERIEURE

Un dispositif d'accrochage d'un aéronef est prévu pour constituer l'interface de liaison entre un moteur et une voilure de l'aéronef. Il permet de transmettre à la structure de cet aéronef les efforts générés par son moteur associé, et autorise également le cheminement du carburant, de l'électricité, de l'hydraulique et de l'air entre le moteur et l'aéronef.

Afin d'assurer la transmission des efforts, le mât comporte une structure rigide, par exemple du type « caisson », c'est-à-dire formée par l'assemblage de longerons supérieurs et inférieurs raccordés entre eux par l'intermédiaire de nervures transversales.

D'autre part, le mât est muni de moyens d'accrochage interposés entre le moteur et la structure rigide du mât, ces moyens comportant globalement deux attaches, généralement une attache avant et une attache arrière.

De plus, des moyens d'accrochage comprennent un dispositif de reprise des efforts de poussée générés par le moteur. Dans l'art antérieur, ce dispositif prend typiquement la forme de deux bielles latérales raccordées d'une part à une partie avant du carter central du moteur ou à une partie arrière du carter de soufflante, et d'autre part à la structure rigide de l'ensemble.

De la même façon, le dispositif d'accrochage comporte également un système de montage interposé entre le mât et la voilure de l'aéronef, ce système étant habituellement composé de deux ou trois attaches.

Enfin, le mât est pourvu d'une structure secondaire assurant la ségrégation et le maintien des systèmes tout en supportant des carénages aérodynamiques.

De façon connue de l'homme du métier, les efforts de poussée générés par le moteur provoquent habituellement une flexion longitudinale plus ou moins importante de ce dernier, à savoir une flexion résultant d'un couple émanant des efforts de poussée, et exercé selon un axe transversal de l'aéronef. A ce titre, il est également noté que durant les phases de croisière de l'aéronef, les efforts de poussée constituent l'unique cause de flexion longitudinale du moteur.

Lorsqu'une telle flexion longitudinale survient, notamment durant les phases de croisière de l'aéronef, deux cas peuvent se présenter. Dans un premier cas où aucune précaution particulière n'a été prise en ce qui concerne la flexion observée, on rencontre alors inévitablement des frottements élevés d'une part entre les pales tournantes de la soufflante et le carter de soufflante, et d'autre part entre les pales tournantes de compresseur et de turbine et le carter central du moteur. La conséquence principale de ces frottements réside alors dans une usure prématurée du moteur, qui est naturellement néfaste à la durée de vie de celui-ci, ainsi qu'à ses performances. Dans un second cas où l'on a prévu des jeux de fonctionnement adaptés de manière à ce qu'il n'y ait quasiment jamais de contact causé par la flexion longitudinale, le rendement du moteur est alors fortement diminué.

Au vu de ce qui précède, il paraît évident qu'il est nécessaire de prévoir des moyens d'accrochage qui limitent au mieux la flexion longitudinale du moteur due aux efforts de poussée, de manière à minimiser autant que possible les frottements contraignants, sans avoir à surdimensionner les jeux de fonctionnement mentionnés ci-dessus.

Or il a été remarqué que les moyens d'accrochage de l'art antérieur ne permettaient pas de limiter de façon totalement satisfaisante la flexion longitudinale du moteur résultant du couple d'axe transversal lié aux efforts de poussée, notamment durant les phases de croisière de l'aéronef.

Un ensemble moteur avec un dispositif d'accrochage est connu de GB 2275308, qui montre toutes les caracteristiques du préambule de la revendication 1.

### EXPOSÉ DE L'INVENTION

L'invention a donc pour but de proposer un ensemble moteur pour aéronef remédiant au moins partiellement aux inconvénients mentionnés ci-dessus relatifs aux réalisations de l'art antérieur.

Pour ce faire, l'invention a pour objet un ensemble moteur pour aéronef selon la revendication 1.

En d'autres termes, dans l'ensemble moteur selon l'invention, toutes les attaches moteur prévues sont rattachées soit au carter de soufflante du moteur, soit à une partie avant du carter central de ce dernier. Ainsi, dans cette configuration spécifique à l'invention où la reprise des efforts générés par le moteur peut s'effectuer exclusivement sur la partie avant du carter central à l'aide de la seconde attache moteur, il est à comprendre que la partie centrale et arrière du carter central de ce moteur n'est plus reliée au mât d'accrochage par une ou des attaches moteur arrière, comme cela était le cas dans les réalisations de l'art antérieur. De façon analogue, l'invention ne prévoit donc aucune attache moteur au niveau du carter d'éjection du moteur, de sorte que c'est quasiment toute la partie du moteur située à l'arrière du carter de soufflante qui est avantageusement dépourvue de lien avec les moyens d'accrochage.

Naturellement, il est à comprendre que la liaison mécanique permettant de faire transiter les efforts provenant du moteur entre ce dernier et la structure rigide est uniquement constituée par les moyens d'accrochage précités, eux-mêmes uniquement constitués par lesdites deux demi-attaches latérales de la première attache et ladite seconde attache. De ce fait, toute la partie du moteur située en arrière par rapport à ladite seconde attache moteur fixée sur une partie avant du carter central du moteur, est dépourvue d'attache moteur pour sa fixation sur la structure rigide.

Ainsi, cette disposition particulière des attaches moteur induit une diminution considérable de la flexion rencontrée au niveau du carter central, que cette flexion soit due aux efforts de poussée générés par le moteur, ou bien due aux rafales susceptibles d'être rencontrées durant les diverses phases de vol de l'aéronef.

Par conséquent, la diminution de flexion susvisée engendre une baisse significative des frottements entre les pales tournantes de compresseur et de turbine et le carter central du moteur, et limite donc grandement les pertes de rendement dues à l'usure de ces pales.

A titre indicatif, il est noté que le fait de prévoir une attache moteur sur le carter de soufflante et une attache moteur sur la partie avant du carter central offre la possibilité de les écarter de façon importante l'une de l'autre. Cet écartement a pour avantage de pouvoir simplifier la conception de ces attaches moteur, en raison du fait que les efforts qu'elles doivent reprendre, associés à un moment selon un axe donné, sont naturellement affaiblis par rapport à ceux rencontrés dans les solutions classiques de l'art antérieur dans lesquelles les attaches moteur situées exclusivement sur le carter central ne pouvaient pas être aussi éloignées les unes des autres.

Enfin, il est indiqué que les attaches moteur et le mât d'accrochage peuvent avantageusement être situés à distance de la partie chaude du moteur, ce qui implique une diminution significative des effets thermiques susceptibles de s'appliquer sur ces éléments.

De préférence, la seconde attache moteur est conçue de manière à reprendre des efforts s'exerçant selon une direction longitudinale du moteur, et les deux demi-attaches de la première attache moteur sont chacune conçues de manière à reprendre des efforts s'exerçant selon la direction longitudinale du moteur ainsi que selon une direction verticale de ce dernier.

D'autre part, on peut alternativement prévoir que l'une ou l'autre des deux attaches moteur est également conçue de manière à reprendre des efforts s'exerçant selon une direction transversale du moteur.

De préférence, la seconde attache moteur est fixée sur une portion de la partie avant du carter central qui porte les pales fixes reliant ce même carter central et ledit carter de soufflante. Dans un tel cas, c'est alors effectivement toute la partie du moteur située à l'arrière du carter de soufflante qui est avantageusement dépourvue de lien avec les moyens d'accrochage, et qui peut donc se déplacer librement sans subir de flexion longitudinale.

Néanmoins, il est rappelé que la seconde attache moteur pourrait se situer plus en arrière sur le carter central du moteur, mais toujours dans une partie avant de ce dernier, c'est-à-dire dans une partie à l'avant du compresseur haute pression.

Selon l'invention, la première attache comporte une partie moteur fixée au moteur ainsi qu'une partie mât fixée à la structure rigide, les parties moteur et mât étant fixées l'une à l'autre et présentant respectivement deux surfaces de contact en appui l'une sur l'autre, ces deux surfaces de contact étant orientées selon un plan défini par les directions transversale et verticale du moteur.

On peut alors prévoir que la seconde attache comporte une partie moteur fixée au moteur ainsi qu'une partie mât fixée à la structure rigide, les parties moteur et mât étant fixées l'une à l'autre et présentant respectivement deux surfaces de contact en appui l'une sur l'autre, ces deux surfaces de contact étant orientées selon un plan défini par les directions longitudinale et verticale du moteur.

Cependant, une solution préférée consiste à prévoir que la seconde attache comporte une partie moteur fixée au moteur ainsi qu'une partie mât fixée à la structure rigide, les parties moteur et mât étant fixées l'une à l'autre et présentant respectivement deux surfaces de contact en appui l'une sur l'autre, ces deux surfaces de contact étant orientées selon un plan défini par les directions transversale et verticale du moteur.

En effet, dans un tel cas, les deux attaches moteur sont alors avantageusement conçues de manière à autoriser une mise en place axiale du moteur sur la structure rigide, le mouvement relatif axial effectué lors du montage étant alors stoppé par les butées entre les différentes surfaces de contact agencées à la fois verticalement et transversalement par rapport au moteur.

Une autre solution consiste à prévoir une seconde attache comportant deux bielles latérales de reprise des efforts de poussée, ces bielles disposant d'une extrémité arrière rapportée sur la structure rigide. Ainsi, en prévoyant que la seconde attache moteur prend la forme d'un dispositif de reprise des efforts de poussée classique, la conception de la partie avant de la structure rigide peut alors être simplifiée, dans la mesure où elle porte uniquement la première attache. En effet, dans cette configuration, l'attache arrière est par exemple raccordée au niveau d'une partie centrale inférieure de la structure rigide, à l'aide d'un palonnier portant les extrémités arrière des bielles de reprise, comme cela est habituellement rencontré dans les réalisations de l'art antérieur.

Enfin, il est indiqué que de façon avantageuse, le système de montage est un système isostatique, ce qui facilite grandement sa conception.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique partielle et en perspective d'un ensemble moteur pour aéronef selon un premier mode de réalisation préféré de la présente invention ;
- la figure 2 représente une vue en perspective d'un ensemble moteur pour aéronef se présentant sous la forme d'une première alternative pour la mise en oeuvre du premier mode de réalisation préféré de la présente invention ;
- la figure 3 représente une vue éclatée en perspective de la première attache montrée sur l'ensemble moteur de la figure 2 ;
- la figure 4 représente une vue éclatée en perspective de la seconde attache montrée sur l'ensemble moteur de la figure 2 ;
- la figure 5 représente une vue en perspective d'un ensemble moteur pour aéronef se présentant sous la forme d'une seconde alternative pour la mise en oeuvre du premier mode de réalisation préféré de la présente invention ;
- la figure 6 représente une vue éclatée en perspective de la seconde attache montrée sur l'ensemble moteur de la figure 5 ;
- la figure 7 représente une vue schématique partielle et en perspective d'un ensemble moteur pour aéronef selon un second mode de réalisation préféré de la présente invention ; et
- la figure 8 représente une vue en perspective d'un ensemble moteur pour aéronef se présentant sous la forme d'une seconde alternative pour la mise en oeuvre du second mode de réalisation préféré de la présente invention.

### EXPOSÉ DÉTAILLÉ DE MODES DE RÉALISATION PRÉFÉRÉS

Sur les figures représentant différents modes de réalisation préférés de la présente invention, les éléments portant les mêmes références numériques correspondent à des éléments identiques ou similaires.

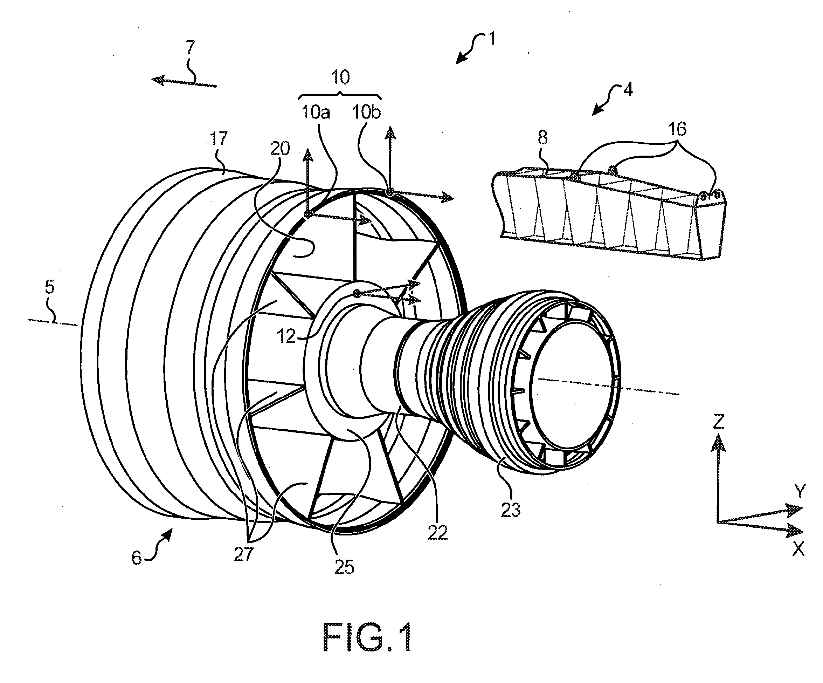

En référence tout d'abord à la figure 1, on voit un ensemble moteur 1 pour aéronef destiné à être fixé sous une aile (non représentée) de cet aéronef, cet ensemble 1 se présentant sous la forme d'un premier mode de réalisation préféré de la présente invention comportant un dispositif d'accrochage 4, ainsi qu'un moteur 6 tel qu'un turboréacteur accroché sous ce dispositif 4.

Globalement, le dispositif d'accrochage 4 comporte une structure rigide 8 portant des moyens d'accrochage du moteur 6, ces moyens d'accrochage étant constitués de deux attaches moteur 10, 12.

A titre indicatif, il est noté que l'ensemble 1 est destiné à être entouré d'une nacelle (non représentée), et que le dispositif d'accrochage 4 comporte une autre série d'attaches 16 permettant d'assurer la suspension de cet ensemble 1 sous la voilure de l'aéronef.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turbomoteur 6, cette direction étant représentée schématiquement par la flèche 7.

Sur la figure 1, on peut voir les deux attaches moteur 10, 12, la série d'attaches 16, et la structure rigide 8 du dispositif d'accrochage 4. Les autres éléments constitutifs non représentés de ce dispositif 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, il est indiqué que le turbomoteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Enfin, le turbomoteur 6 se termine vers l'arrière par un carter d'éjection 23 de plus grande dimension que celle du carter central 22. Bien entendu, les carters 18, 22 et 23 sont solidaires les uns des autres. A ce titre, le carter central 22 comporte une portion 25 située à l'avant et disposant d'un plus grand diamètre, cette portion 25 portant des pales fixés 27 reliant ce même carter central 22 au carter de soufflante 18.

Comme on peut l'apercevoir sur la figure 1, les attaches moteur 10, 12 du dispositif 4 sont prévues au nombre de deux, et respectivement dénommées première attache moteur et seconde attache moteur, ou encore attache supérieure et attache inférieure en raison de leur disposition relative qui sera explicitée ultérieurement.

La première attache moteur 10 est interposée entre une extrémité avant de la structure rigide 8 (non représentée pour des raisons de clarté), et une partie annulaire supérieure du carter de soufflante 18.

Plus précisément, la première attache moteur 10 est composée de deux demi-attaches latérales 10a, chacune de ces deux demi-attaches 10a étant conçue de manière à pouvoir reprendre des efforts s'exerçant selon la direction X ainsi que selon la direction Z, comme cela est représenté schématiquement sur la figure 1. Naturellement, ces deux demi-attaches 10a sont disposées symétriquement par rapport à un plan vertical (non représenté) passant par l'axe longitudinal 5 du moteur 6.

D'une façon plus générale, il est précisé que le plan vertical susmentionné constitue en plan de symétrie pour l'ensemble du dispositif d'accrochage 4 équipé de ses moyens d'accrochage.

D'autre part, la seconde attache 12 est interposée entre l'extrémité avant de la structure rigide 8, et la portion 25 du carter central 22, c'est-à-dire au niveau d'une extrémité avant de ce carter central 22.

Cette seconde attache 12 qui est donc située au-dessous de la première attache 10 est conçue de manière à pouvoir reprendre des efforts s'exerçant selon la direction X, ainsi que des efforts s'exerçant selon la direction Y.

Avec un tel agencement isostatique, comme on peut le voir schématiquement sur la figure 1, les efforts s'exerçant selon la direction longitudinale X sont repris conjointement par les première et seconde attaches 10, 12, les efforts s'exerçant selon la direction transversale Y sont repris exclusivement par la seconde attache 12, et les efforts s'exerçant selon la direction verticale Z sont repris conjointement par les deux demi-attaches 10a de la première attache 10.

D'autre part, la reprise du moment s'exerçant selon la direction X est assurée uniquement par les deux demi-attaches 10a de l'attache 10, tandis que la reprise des moments s'exerçant selon la direction Y est assurée conjointement par ces deux attaches moteur 10, 12. En outre, la reprise du moment s'exerçant selon la direction Z est également assurée uniquement par les deux demi-attaches 10a de la première attache 10.

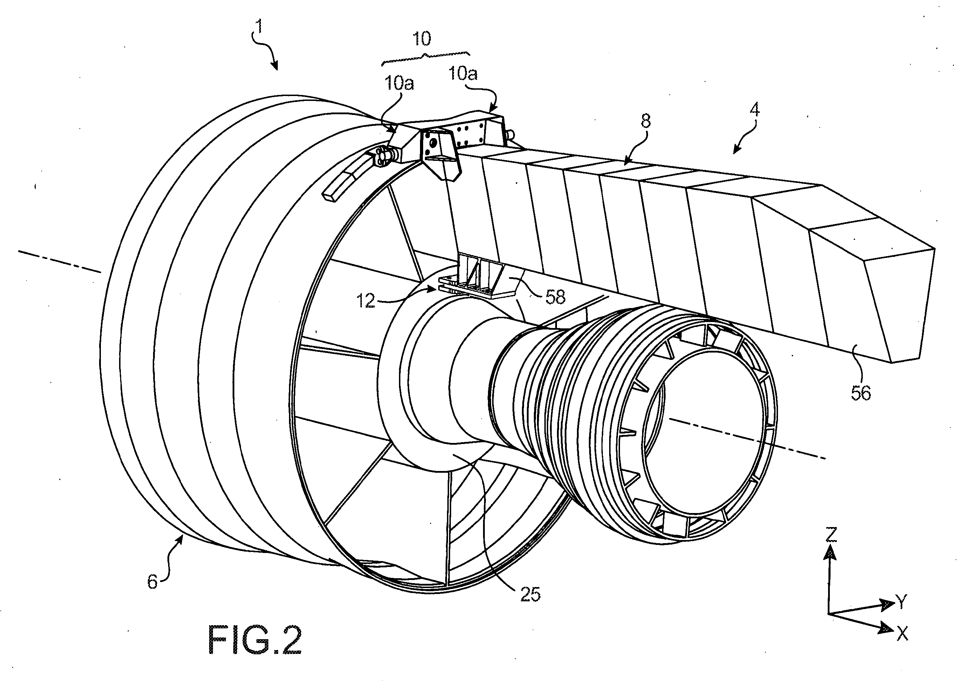

La figure 2 montre un ensemble moteur 1 prenant la forme d'une première alternative pour la mise en oeuvre du premier mode de réalisation préféré montré sur la figure 1.

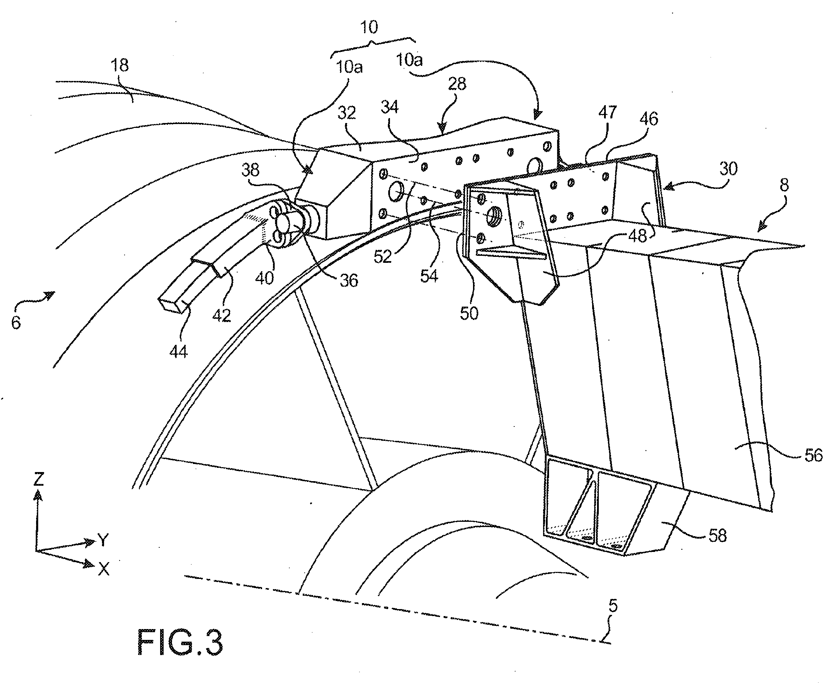

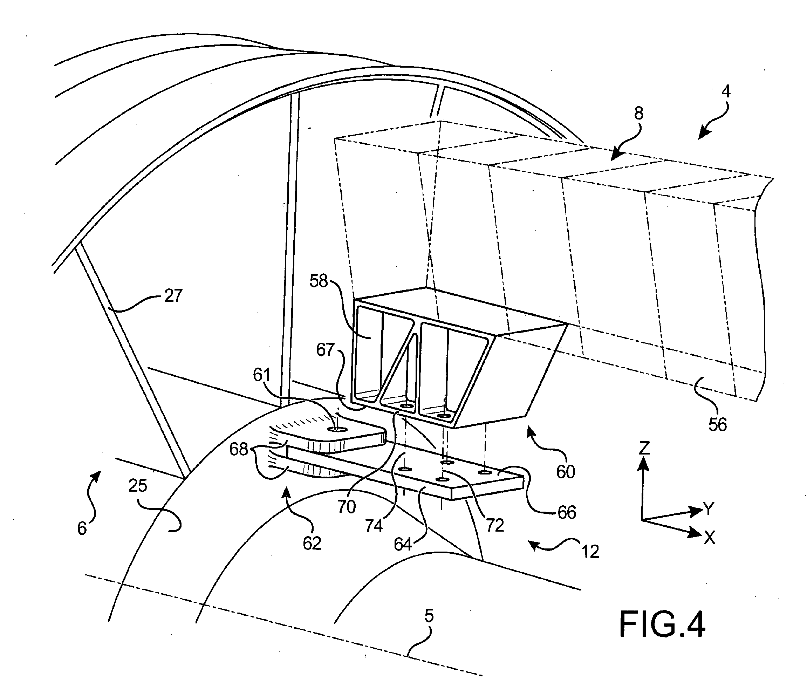

Dans cette première alternative, la première attache 10 qui incorpore les deux demi-attaches 10a présente une interface verticale, c'est-à-dire qu'elle comporte deux parties respectivement solidaires du moteur 6 et de la structure rigide 8 et qui sont en contact selon un plan YZ, comme cela sera explicité plus en détails en référence à la figure 3. En revanche, la seconde attache 12 présente une interface horizontale, c'est-à-dire qu'elle comporte deux parties respectivement solidaires du moteur 6 et de la structure rigide 8 et qui sont en contact selon un plan XY, comme cela sera explicité plus en détails en référence à la figure 4.

En référence donc à la figure 3 montrant la première attache 10 ou attache supérieure avant le montage final entre le moteur 6 et la structure rigide 8, on peut apercevoir que cette attache 10 comporte une partie moteur 28 fixée au moteur 6 ainsi qu'une partie mât 30 fixée à la structure rigide 8, chacune des ces parties 28, 30 présentant le plan vertical passant par l'axe longitudinal 5 comme plan de symétrie, afin de définir les deux demi-attaches 10a.

La partie moteur 28 comporte une ferrure centrale 32 orientée transversalement et fixée sur une partie d'extrémité supérieure du carter de soufflante 18, cette ferrure centrale 32 intégrant une surface de contact 34 orientée selon un plan YZ et vers l'arrière.

Par ailleurs, de part et d'autre de cette ferrure centrale 32, il est prévu un pion 36 orienté selon la direction Y (un seul étant visible sur la figure 3 en raison de la vue en perspective éclatée), chaque pion 36 faisant partie intégrante de sa demi-attache 10a associée et coopérant avec une ferrure latérale 38, de préférence triangulaire.

Cette ferrure latérale 38 placée dans un plan XZ a donc un sommet articulé sur le pion 36 susmentionné, tandis que ses deux autres sommets sont fixés par axe sur une ferrure latérale secondaire 40 également orientée selon un plan XZ, et réalisée d'une seul tenant avec une armature 42 suivant le contour circonférentiel du carter de soufflante 18. Cette armature 42 présente par exemple une section en forme de L, et est montée fixement sur une autre armature 44 solidaire du carter de soufflante 18, qui dispose également d'une section en forme de L pour assurer un contact biplan entre ces deux éléments 42, 44.

La partie mât 30 est quant à elle équipée d'une plaque centrale 46 intégrant une surface de contact 47 orientée selon un plan YZ et vers l'avant. Cette plaque centrale 46 repose sur deux supports latéraux 48 disposés de part et d'autre de la partie avant de la structure rigide 8.

Comme cela est montré schématiquement par les lignes en pointillés 50, 52, 54 de la figure 3, les parties moteur et mât 28, 30 sont destinées à être fixées l'une à l'autre, par exemple par l'intermédiaire de boulons et d'un pion (non représentés) orientés selon la direction X. Pour ce faire, les surfaces de contact 34 et 47 sont au préalable amenées en appui l'une contre l'autre, puis les boulons et le pion de chaque demi-attache 10a sont positionnés de façon à traverser successivement la ferrure centrale 32, la plaque centrale 46 et le support latéral 48, ces derniers éléments présentant donc des trous prévus à cet effet.

Il est noté que si seule la demi-attache 10a de gauche est entièrement visible sur la figure 3, celle de droite dispose d'une conception identique. D'autre part, il est également à comprendre que la ferrure centrale 32 et la plaque centrale 46 sont des éléments considérés comme communs aux deux demi-attaches 10a de l'attache supérieure 10.

Pour porter cette attache supérieure 10, la structure rigide 8 comporte un caisson principal 56 de type classique, c'est-à-dire s'étendant de l'arrière vers l'avant sensiblement selon la direction X, et formé par l'assemblage de longerons supérieurs et inférieurs raccordés entre eux par l'intermédiaire de nervures transversales. C'est donc au niveau d'une partie d'extrémité avant de ce caisson 56 qu'est solidarisée la partie mât 30 de l'attache 10.

D'autre part, la structure rigide 8 comporte également une partie en projection vers le bas 58, cette partie 58 étant rattachée sous l'extrémité avant du caisson 56.

La partie en projection 58 est essentiellement prévue pour assurer l'accrochage de la seconde attache 12, comme cela va être explicité plus en détails en référence à la figure 4.

En référence donc à cette figure 4 montrant la seconde attache 12 ou attache inférieure avant le montage final entre le moteur 6 et la structure rigide 8, on peut apercevoir que cette attache 12 comporte une partie moteur 62 fixée au moteur 6, et plus précisément sur la portion 25 de la partie avant du carter central, ainsi qu'une partie mât 60 fixée à la structure rigide 8, et plus précisément sur la partie en projection 58, chacune des ces parties 60, 62 présentant le plan vertical passant par l'axe longitudinal 5 comme plan de symétrie.

La partie moteur 62 comporte une plaque centrale 64 orientée longitudinalement et horizontalement, et intègre une surface de contact 66 orientée selon un plan XY, vers le haut. La partie moteur 62 comprend également deux ferrures de support 68 solidaires d'une partie supérieure de la portion 25, et entre lesquelles est insérée une extrémité avant de la plaque centrale 64. Pour ce faire, les deux ferrures de support 68 sont également agencées selon des plans XY, celle se situant au-dessous étant éventuellement équipée de nervures de renfort longitudinales (non représentées). Un axe 61 orienté sensiblement verticalement vient établir une jonction entre les deux ferrures de support 68 et la plaque centrale 64.

La partie mât 60 est quant à elle essentiellement équipée d'une plaque centrale 70 intégrant une surface de contact 67 orientée selon un plan XY et vers le bas, cette plaque centrale 70 constituant alors une extrémité inférieure de la portion en projection 58 de la structure rigide 8.

Comme cela est montré schématiquement par les lignes en pointillés 72, 74 de la figure 4, les parties moteur et mât 62, 60 sont destinées à être fixées l'une à l'autre, par exemple par l'intermédiaire de boulons (non représentés) orientés selon la direction Z. Pour ce faire, les surfaces de contact 66 et 67 sont au préalable amenées en appui l'une contre l'autre, puis les boulons sont positionnés de façon à traverser successivement les plaques centrales 70 et 64, ces dernières étant donc pourvues de trous prévus à cet effet.

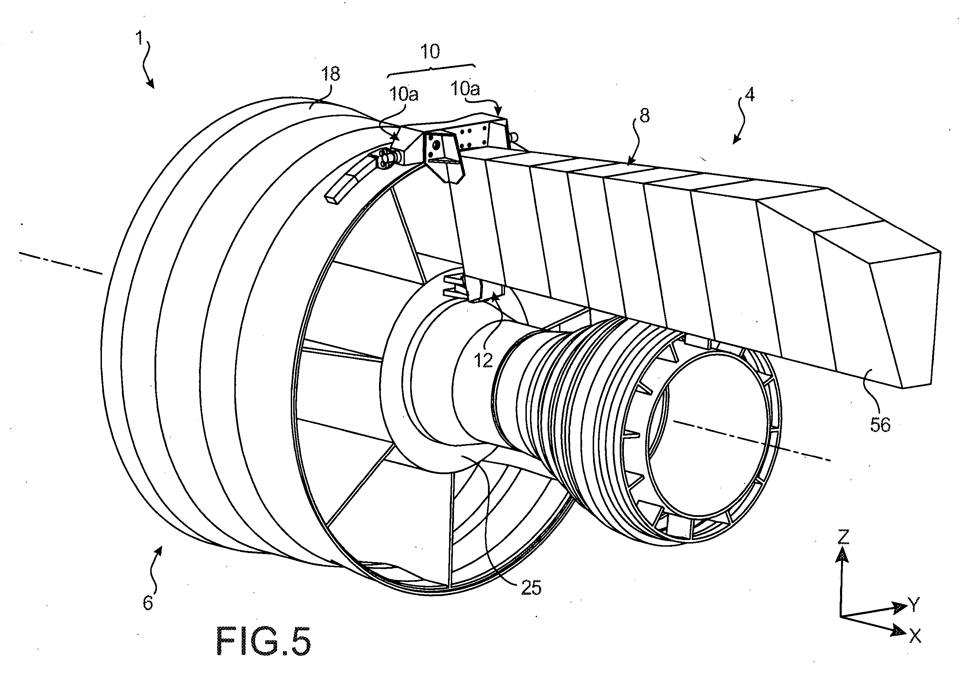

La figure 5 montre un ensemble moteur 1 prenant la forme d'une seconde alternative pour la mise en oeuvre du premier mode de réalisation préféré montré sur la figure 1.

Dans cette seconde alternative, la première attache 10 qui incorpore les deux demi-attaches 10a présente une conception identique à celle de l'attache 10 montrée sur les figures 2 et 3. Par conséquent, elle ne sera pas davantage décrite.

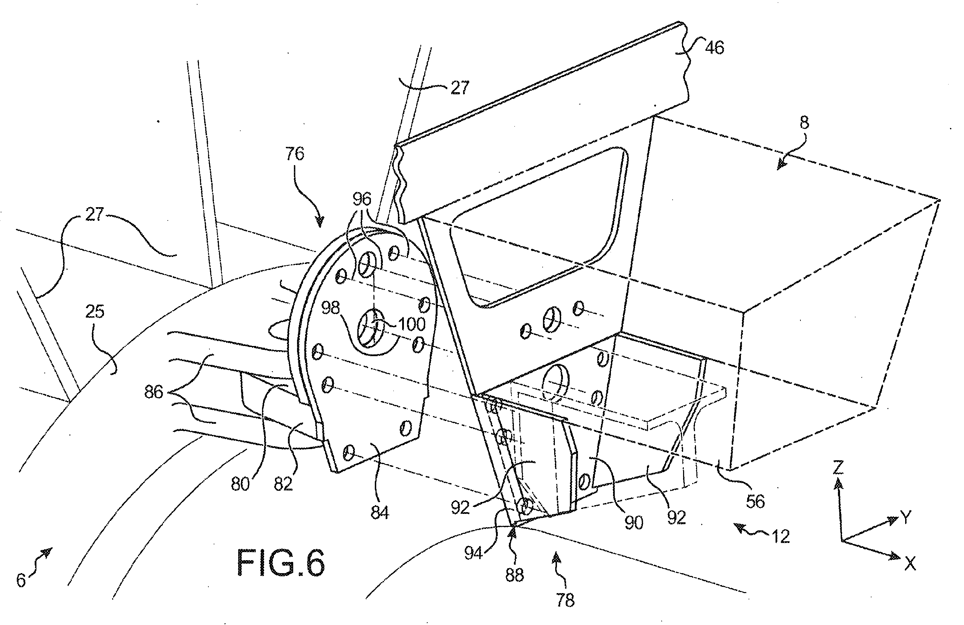

En revanche, la seconde attache 12 de cette seconde alternative présente la spécificité d'intégrer une interface verticale, c'est-à-dire qu'elle comporte deux parties respectivement solidaires du moteur 6 et de la structure rigide 8 et qui sont en contact selon un plan YZ, comme cela va à présent être explicité en détails en référence à la figure 6.

Sur cette figure 6 montrant la seconde attache 12 ou attache inférieure avant le montage final entre le moteur 6 et la structure rigide 8, on peut apercevoir que cette attache 12 comporte une partie moteur 76 fixée au moteur 6 ainsi qu'une partie mât 78 fixée à la structure rigide 8, chacune des ces parties 76, 78 présentant le plan vertical passant par l'axe longitudinal 5 comme plan de symétrie.

La partie moteur 76 comporte une ferrure centrale supérieure 80 et une ferrure centrale inférieure 82, ces ferrures 80, 82 étant en contact et présentant respectivement une section en forme de L et une section en forme générale de T. Elles sont agencées de sorte que leurs parties arrière superposées soient orientées selon un plan YZ, et de manière à ce que la partie arrière de la ferrure 82 située la plus en arrière forme une surface de contact 84 orientée selon un plan YZ, et vers l'arrière.

La parties avant en contact de ces deux ferrures centrales 80, 82 sont interposées entre deux ferrures de support 86 solidaires d'une partie supérieure de la portion 25, ces deux ferrures 86 étant agencées selon des plans XY, au même titre que les parties avant indiquées ci-dessus. A titre indicatif, la jonction entre les ferrures de support 86 et les parties avant des ferrures 80, 82 s'effectue de préférence à l'aide d'un axe, par exemple un axe double, traversant l'ensemble de ces éléments selon la direction Z.

La partie mât 78 est quant à elle équipée d'une ferrure centrale 88 pourvue d'une plaque centrale 90 orientée selon un plan YZ, et de deux flancs latéraux 92 chacun orienté selon un plan XZ.

Cette ferrure centrale 88 définit par l'intermédiaire de sa plaque 90 une surface de contact 94 orientée selon un plan YZ et vers l'avant.

En outre, il est noté que cette ferrure 88 est située globalement au-dessous d'une extrémité avant de la structure rigide 8 à laquelle elle est solidarisée, mais que la plaque centrale 90 peut néanmoins s'étendre vers le haut jusqu'à intégrer la plaque centrale 46 de l'attache avant 10, montrée notamment sur la figure 3. En revanche, les flancs latéraux 92 de cette ferrure 88 sont de préférence situés dans la continuité des flancs latéraux (non référencés) de la structure rigide 8, comme cela est clairement visible sur la figure 6.

De plus, une ou plusieurs nervures de renfort longitudinales (une seule étant représentée en pointillés) peuvent être adjointes parallèlement aux flancs latéraux 92, afin d'accroître les possibilités de reprendre les efforts de poussée.

Comme cela est montré schématiquement par les lignes en pointillés 96, 98 de la figure 6, les parties moteur et mât 76, 78 sont destinées à être fixées l'une à l'autre, par exemple par l'intermédiaire de boulons et d'un pion (non représentés) orientés selon la direction X. Pour ce faire, les surfaces de contact 84, 94 sont au préalable amenées en appui l'une contre l'autre, puis les boulons et le pion sont positionnés de façon à traverser successivement l'une des ferrures centrales 80, 82 et la plaque centrale 90 pourvues de trous prévus à cet effet.

A titre indicatif, il est précisé que le trou référencé 100 sur la figure 6 et pratiqué sur la ferrure centrale supérieure 80 est destiné à recevoir un pion orienté longitudinalement de façon à ce qu'il puisse reprendre les efforts s'exerçant selon la direction Y, puisque comme cela a été indiqué précédemment, il est rappelé que cette seconde attache 12 est destinée à reprendre les efforts s'exerçant selon les directions X et Y.

Cette seconde alternative présente l'avantage de simplifier l'avant de la structure rigide 8 qui n'a plus besoin d'intégrer de partie en projection comme cela était le cas dans la première alternative de la figure 2. La structure rigide 8 prend alors la forme d'un simple caisson classique 56 identique ou similaire à celui montré sur la figure 2.

En outre, les deux attaches 10, 12 constitutives des moyens d'accrochage présentent toutes deux une interface verticale et transversale qui autorise avantageusement une mise en place axiale du moteur 6 sur la structure rigide 8, le mouvement relatif axial effectué lors du montage étant alors stoppé par les butées entre les différentes surfaces de contact 34, 47, 84, 94 agencées selon des plans YZ.

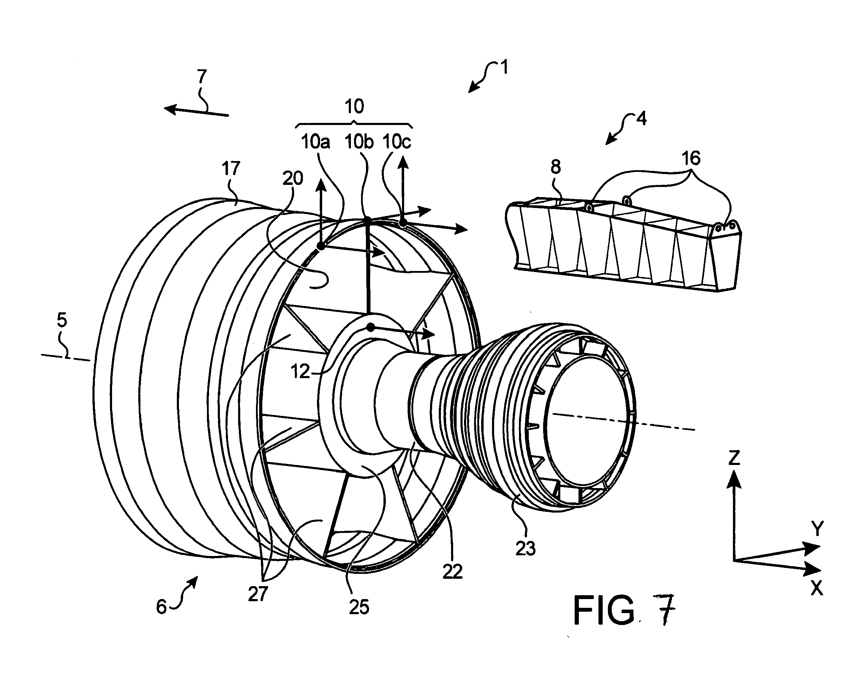

En référence à présent à la figure 7, on voit un ensemble moteur 1 pour aéronef destiné à être fixé sous une aile (non représentée) de cet aéronef, cet ensemble 1 se présentant sous la forme d'un second mode de réalisation préféré de la présente invention comportant un dispositif d'accrochage 4 ainsi qu'un moteur 6 tel qu'un turboréacteur accroché sous ce dispositif 4.

Cet ensemble moteur 1 est sensiblement identique à celui montré sur la figure 1, étant donné que la seule différence réside dans le fait que les efforts s'exerçant selon la direction Y ne sont plus repris par la seconde attache moteur 12, mais par une partie centrale 10b de la première attache moteur 10, qui s'ajoute aux deux demi-attaches 10a déjà présentes.

Par conséquent, avec un tel agencement isostatique et comme on peut le voir schématiquement sur la figure 7, les efforts s'exerçant selon la direction longitudinale X sont repris conjointement par les première et seconde attaches 10, 12, les efforts s'exerçant selon la direction transversale Y sont repris exclusivement par la partie centrale 10b de l'attache moteur 10, et les efforts s'exerçant selon la direction verticale Z sont repris conjointement par les deux demi-attaches 10a de la première attache 10.

D'autre part, la reprise du moment s'exerçant selon la direction X est assurée uniquement par les deux demi-attaches 10a de l'attache 10, tandis que la reprise des moments s'exerçant selon la direction Y est assurée conjointement par ces deux attaches moteur 10, 12. En outre, la reprise du moment s'exerçant selon la direction Z est également assurée uniquement par les deux demi-attaches 10a de la première attache 10.

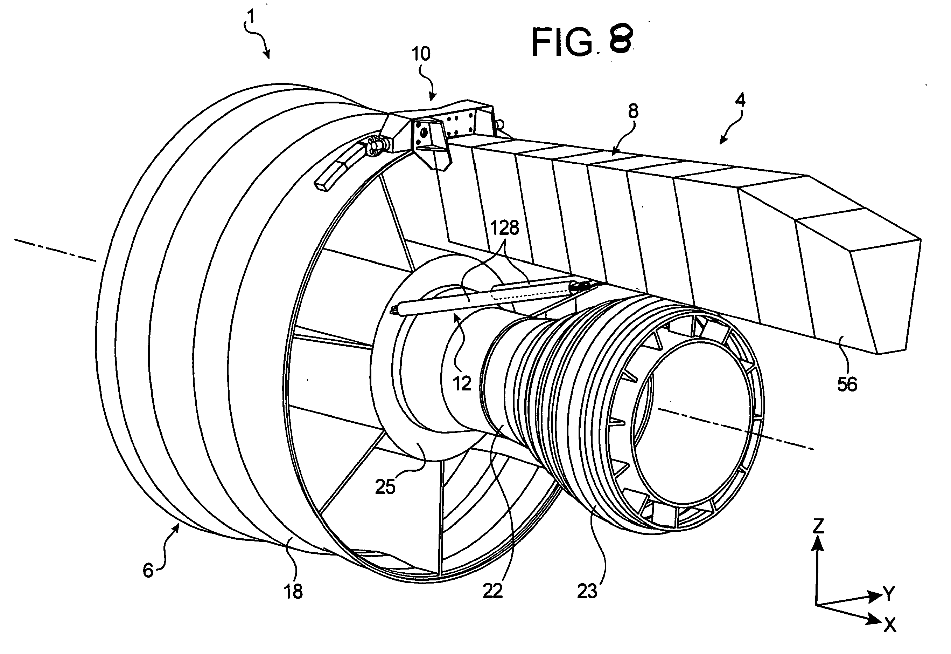

La figure 8 montre un ensemble moteur 1 prenant la forme d'une alternative pour la mise en oeuvre du second mode de réalisation préféré montré sur la figure 7.

Dans cette seconde alternative, la première attache 10 présente une conception identique à celle de l'attache 10 montrée sur la figure 3, avec la particularité supplémentaire d'être prévue pour assurer la reprise des efforts s'exerçant selon la direction Y. Par conséquent, cette première attache 10 ne sera pas davantage décrite.

D'autre part, la seconde attache 12 présente une conception identique à celle d'un dispositif classique de reprise des efforts de poussée à deux bielles latérales 128. Par conséquent, cette seconde attache 12 ne sera pas non plus davantage décrite.

Enfin, il est noté que les deux premières alternatives du premier mode de réalisation préféré montrées respectivement sur les figures 2 et 5 disposent d'une conception leur permettant d'assurer la reprise des efforts selon la direction Y avec la première attache 10 et d'assurer uniquement la reprise des efforts selon la direction X avec la seconde attache 12, de sorte que ces deux alternatives conviennent également pour la mise en oeuvre du second mode de réalisation préféré de la présente invention. En particulier, dans le cas de la seconde alternative montrée sur les figures 5 et 6, l'attache 12 n'a plus besoin d'intégrer de pion longitudinal traversant un trou 100, puisque la reprise des efforts s'exerçant selon la direction Y s'effectue dans ce cas à l'aide de l'attache 10, dont la conception détaillée en référence à la figure 3 est tout à fait capable d'autoriser une telle reprise.

Bien entendu, diverses modifications peuvent être apportées par l'homme du métier aux ensembles moteur 1 pour aéronef qui viennent d'être décrits, uniquement à titre d'exemples non limitatifs.

## Revendications

1. Ensemble moteur (1) pour aéronef comprenant un moteur (6) et un dispositif d'accrochage (4) du moteur (6), ledit dispositif d'accrochage (4) étant destiné à être interposé entre une voilure (2) de l'aéronef et ledit moteur (6), et comportant une structure rigide (8) ainsi que des moyens d'accrochage du moteur (6) sur ladite structure rigide (8), lesdits moyens d'accrochage étant constitués d'une première attache (10) ainsi que d'une seconde attache (12), ladite première attache (10) est constituée de deux demi-attaches latérales (10a) chacune fixée sur un carter de soufflante (18) du moteur (6), et en ce que ladite seconde attache (12) est fixée sur une partie avant d'un carter central (22) de ce moteur (6), **caractérisé en ce que** ladite première attache (10) comporte une partie moteur (28) fixée au moteur (6) ainsi qu'une partie mât (30) fixée à la structure rigide (8), les parties moteur et mât (28, 30) étant fixées l'une à l'autre et présentant respectivement deux surfaces de contact (34, 47) en appui l'une sur l'autre, ces deux surfaces de contact (34, 47) étant orientées selon un plan défini par les directions transversale (Y) et verticale (Z) du moteur (6).

2. Ensemble moteur (1) selon la revendication 1, **caractérisé en ce que** ladite seconde attache moteur (12) est conçue de manière à reprendre des efforts s'exerçant selon une direction longitudinale (X) du moteur (6), et **en ce que** les deux demi-attaches (10a) de ladite première attache moteur (10) sont chacune conçues de manière à reprendre des efforts s'exerçant selon la direction longitudinale (X) du moteur (6) ainsi que selon une direction verticale (Z) de ce dernier.

3. Ensemble moteur (1) selon la revendication 2, **caractérisé en ce que** ladite seconde attache moteur (12) est également conçue de manière à reprendre des efforts s'exerçant selon une direction transversale (Y) du moteur (6).

4. Ensemble moteur (1) selon la revendication 2, **caractérisé en ce que** ladite première attache moteur (10) est également conçue de manière à reprendre des efforts s'exerçant selon une direction transversale (Y) du moteur (6).

5. Ensemble moteur (1) selon l'une quelconque des revendications précédentes, **caractérisé en ce que** ladite seconde attache (12) est fixée sur une portion (25) de la partie avant du carter central (22), cette portion (25) portant des pales fixes (27) reliant ce même carter central (22) et ledit carter de soufflante (18).

6. Ensemble moteur (1) selon la revendication 1, **caractérisé en ce que** ladite seconde attache (12) comporte une partie moteur (62) fixée au moteur (6) ainsi qu'une partie mât (60) fixée à la structure rigide (8), les parties moteur et mât (60, 62) étant fixées l'une à l'autre et présentant respectivement deux surfaces de contact (66, 67) en appui l'une sur l'autre, ces deux surfaces de contact (66, 67) étant orientées selon un plan défini par les directions longitudinale (X) et verticale (Z) du moteur (6).

7. Ensemble moteur (1) selon la revendication 1, **caractérisé en ce que** ladite seconde attache (12) comporte une partie moteur (76) fixée au moteur (6) ainsi qu'une partie mât (78) fixée à la structure rigide (8), les parties moteur et mât (76, 78) étant fixées l'une à l'autre et présentant respectivement deux surfaces de contact (84, 94) en appui l'une sur l'autre, ces deux surfaces de contact (84, 94) étant orientées selon un plan défini par les directions transversale (Y) et verticale (Z) du moteur (6).

8. Ensemble moteur (1) selon la revendication 4, **caractérisé en ce que** ladite seconde attache (12) comporte deux bielles latérales de reprise des efforts de poussée (128), lesdites bielles (128) disposant d'une extrémité arrière rapportée sur ladite structure rigide (8).

9. Ensemble moteur (1) selon l'une quelconque des revendications précédentes, **caractérisé en ce que** lesdits moyens d'accrochage constituent un système isostatique.

## Claims

1. An aircraft engine assembly (1) comprising an engine (6) and a mount device (4) for the engine (6), said engine mount device (4) being intended to be positioned between a wing (2) of the aircraft and said engine (6), and comprising a rigid structure (8) and means to mount the engine (6) on said rigid structure (8), said mounting means consisting of a first attachment (10) and a second attachment (12), said first attachment (10) consists of two side semi-attachments (10a) each fixed to a fan case (18) of the engine (6), and in that the second attachment (12) is fixed to a forward part of a central case (22) of this engine (6), **characterized in that** said first attachment (10) comprises an engine part (28) secured to the engine (6) and an engine mount part (30) secured to the rigid structure (8), the engine and engine mount parts (28, 30) being fixed to one another and respectively having two contact surfaces (34, 47) bearing on each other, these two contact surfaces (34, 47) being oriented along a plane defined by the transverse (Y) and vertical (Z) directions of the engine (6).

2. An engine assembly (1) according to claim 1, **characterized in that** said second engine attachment (12) is designed so as to transfer loads exerted along a longitudinal direction (X) of the engine (6), and **in that** the two semi-attachments (10a) of said first engine attachment (10) are each designed so as to transfer the loads exerted along the longitudinal direction (X) of the engine (6) and along a vertical direction (Z) of the engine.

3. An engine assembly (1) according to claim 2, **characterized in that** said second engine attachment (12) is also designed so as to transfer loads exerted along a transverse direction (Y) of the engine (6).

4. An engine assembly (1) according to claim 2, **characterized in that** said first engine attachment (10) is also designed so as to transfer loads exerted along a transverse direction (Y) of the engine (6).

5. An engine assembly (1) according to any of the preceding claims, **characterized in that** said second attachment (12) is fixed to a portion (25) of the forward part of the central case (22), this portion (25) carrying fixed blades (27) connecting this same central case (22) to said fan case (78).

6. An engine assembly (1) according to claim 1, **characterized in that** said second attachment (12) comprises an engine part (62) secured to the engine (6) and an engine mount part (60) secured to the rigid structure (8), the engine and engine mount parts (60, 62) being fixed to one another and respectively having two contact surfaces (66, 67) bearing against each other, these two contact surfaces (66, 67) being oriented along a plane defined by the longitudinal (X) and vertical (Z) directions of the engine (6).

7. An engine assembly (1) according to claim 1, **characterized in that** said second attachment (12) comprises an engine part (76) secured to the engine (6) and an engine mount part (78) secured to the rigid structure (8), the engine and engine mount parts (76, 78) being fixed to one another and respectively having two contact surfaces (84, 94) bearing against each other, these two contact surfaces (84, 94) being oriented along a plane defined by the transverse (Y) and vertical (Z) directions of the engine (6).

8. An engine assembly (1) according to claim 4, **characterized in that** said second attachment (12) comprises two side thrust links (128), said links (128) having an aft end joined to said rigid structure (8).

9. An engine assembly (1) according to any of the preceding claims, **characterized in that** said mounting means form an isostatic system.

## Patentansprüche

1. Triebwerksystem (1) für ein Luftfahrzeug, umfassend ein Triebwerk (6) und eine Aufhängevorrichtung (4) für das Triebwerk (6), wobei die Aufhängevorrichtung (4) zum Einfügen zwischen einen Tragflügel (2) des Luftfahrzeugs und das Triebwerk (6) bestimmt ist und eine starre Struktur (8) sowie Aufhängemittel für das Triebwerk (6) an der starren Struktur (8) aufweist, wobei die Aufhängemittel aus einer ersten Befestigung (10) sowie einer zweiten Befestigung (12) bestehen, wobei die erste Befestigung (10) aus zwei seitlichen Halbbefestigungen (10a) besteht, die jeweils an einem Fangehäuse (18) des Triebwerks (6) befestigt sind, und die zweite Befestigung (12) an einem vorderen Teil eines Zentralgehäuses (22) dieses Triebwerks (6) befestigt ist,
**dadurch gekennzeichnet, dass** die erste Befestigung (10) ein Triebwerkteil (28), das an dem Triebwerk (6) befestigt ist, sowie ein Mastbaumteil (30), das an der starren Struktur (8) befestigt ist, aufweist, wobei das Triebwerk- und das Mastbaumteil (28, 30) aneinander befestigt sind und jeweils eine Kontaktoberfläche aufweisen, wobei sich die beiden Kontaktoberflächen (34, 47) aneinander abstützen, wobei diese beiden Kontaktoberflächen (34, 47) nach einer Ebene ausgerichtet sind, die durch die Querrichtung (Y) und die Vertikalenrichtung (Z) des Triebwerks (6) festgelegt ist.

2. Triebwerksystem (1) nach Anspruch 1, **dadurch gekennzeichnet, dass** die zweite Triebwerkbefestigung (12) zur Aufnahme von Kräften, die in einer Längsrichtung (X) des Triebwerks (6) auftreten, gestaltet ist und dass die beiden Halbbefestigungen (10a) der ersten Triebwerkbefestigung (10) jeweils zur Aufnahme von Kräften, die in der Längsrichtung (X) des Triebwerks (6) sowie in einer Vertikalenrichtung (Z) des Letzteren auftreten, gestaltet sind.

3. Triebwerksystem (1) nach Anspruch 2, **dadurch gekennzeichnet, dass** die zweite Triebwerkbefestigung (12) auch zur Aufnahme von Kräften, die in einer Querrichtung (Y) des Triebwerks (6) auftreten, gestaltet ist.

4. Triebwerksystem (1) nach Anspruch 2, **dadurch gekennzeichnet, dass** die erste Triebwerkbefestigung (10) auch zur Aufnahme von Kräften, die in einer Querrichtung (Y) des Triebwerks (6) auftreten, gestaltet ist.

5. Triebwerksystem (1) nach einem der vorhergehenden Ansprüche, **dadurch gekennzeichnet, dass** die zweite Befestigung (12) an einem Abschnitt (25) des vorderen Teils des Zentralgehäuses (22) befestigt ist, wobei dieser Abschnitt (25) feste Rotorblätter (27) trägt, die dieses Zentralgehäuse (22) und das Fangehäuse (18) verbinden.

6. Triebwerksystem (1) nach Anspruch 1, **dadurch gekennzeichnet, dass** die zweite Befestigung (12) ein Triebwerkteil (62), das an dem Triebwerk (6) befestigt ist, sowie ein Mastbaumteil (60), das an der starren Struktur (8) befestigt ist, aufweist, wobei das Triebwerkteil und das Mastbaumteil (60, 62) aneinander befestigt sind und jeweils eine Kontaktoberfläche aufweisen, wobei sich die beiden Kontaktoberflächen (66, 67) aneinander abstützen, wobei diese beiden Kontaktoberflächen (66, 67) nach einer Ebene ausgerichtet sind, die durch die Längsrichtung (X) und die Vertikalenrichtung (Z) des Triebwerks (6) festgelegt ist.

7. Triebwerksystem (1) nach Anspruch 1, **dadurch gekennzeichnet, dass** die zweite Befestigung (12) ein Triebwerkteil (76), das an dem Triebwerk (6) befestigt ist, sowie ein Mastbaumteil (78), das an der starren Struktur (8) befestigt ist, aufweist, wobei das Triebwerkteil und das Mastbaumteil (76, 78) aneinander befestigt sind und jeweils eine Kontaktoberfläche aufweisen, wobei sich die beiden Kontaktoberflächen (84, 94) aneinander abstützen, wobei diese beiden Kontaktoberflächen (84, 94) nach einer Ebene ausgerichtet sind, die durch die Querrichtung (Y) und die Vertikalenrichtung (Z) des Triebwerks (6) festgelegt ist.

8. Triebwerksystem (1) nach Anspruch 4, **dadurch gekennzeichnet, dass** die zweite Befestigung (12) zwei seitliche Stangen zur Aufnahme von Schubkräften (128) aufweist, wobei die Stangen (128) ein hinteres Ende aufweisen, das an der starren Struktur (8) angebracht ist.

9. Triebwerksystem (1) nach einem der vorhergehenden Ansprüche, **dadurch gekennzeichnet, dass** die Aufhängemittel ein isostatisches System bilden.
